# EUROPEAN PATENT APPLICATION

(11) **EP 3 838 374 A1**
(43) Date of publication of application: **23.06.2021**
(21) Application number: 19217679.0
(22) Date of filing: 18.12.2019
(51) Int. Cl.: B01D 35/30, C02F 1/00

(54) **FILTRATION DEVICE WITH CARTRIDGE MOUNT**

(71) Applicant: Brita GmbH, 65232 Taunusstein (DE)
(72) Inventor: Jost, Alexander, 65719 Hofheim (DE); Bayer-Mohr, Beate, 65201 Wiesbaden (DE)

(57) **Abstract**

The invention relates to a filtration device (2) comprising an inlet funnel (4) having a funnel interior (26), a funnel outlet (28), and a first sealing element (32) around the funnel outlet (28), wherein a cartridge mount (40) comprising a mount housing (44) having a second sealing element (54) is arranged such that the second sealing element (54) and the first sealing element (32) form a first seal (56), wherein the mount housing (44) comprises a mount inlet (50) and a mount outlet (60) connected by a flow path (P), at least one mount filter (70) in the flow path (P), and a third sealing element (82) around the mount inlet (50), wherein a filter cartridge (100) comprising a cartridge housing (102) having a fourth sealing element (120) is arranged such that the fourth sealing element (120) and the third sealing element (82) form a second seal (122), wherein the cartridge housing (102) of the filter cartridge (100) has a cartridge inlet and a cartridge outlet (112), the cartridge inlet being in direct fluid communication with the funnel outlet (28) and the cartridge outlet (112) being in direct fluid communication with the mount inlet (50), and wherein at least one cartridge filter is arranged in the cartridge housing (102).

## Description

The present invention relates to a filtration device as well as a cartridge mount for a filtration device.

Filtration devices are being used as water filters for everyday use in households, in which case they are also called table water filters. They are primarily used for clearing tap water of unwanted substances. Among these substances are chlorine and hardness builders such as calcium and magnesia, but also lead, which finds its way into tap water through the use of lead pipes, especially in older houses.

Table water filters are gravity-operated. Besides the pouring of tap water into the water filter, no work is necessary for filtering the water. The water simply flows downwards through a filter cartridge and into a receptacle for the filtered water due to the gravitational force. The filter cartridge is accordingly also gravity-operated.

One filtration device known from EP 1 230 166 B1 comprises an inlet funnel having a bottom wall, which is provided with an opening for a filter cartridge. The filter cartridge is plugged into the opening, creating a seal between the opening and a sealing rim of the filter cartridge. In use, water is introduced into the inlet funnel from above and then flows into the filter cartridge through water inlets. Granular treatment media for the water is located inside of the filter cartridge. The treatment media usually comprises ion exchange resin and/or active coal, but other components may be used as treatment media as well. In the filter cartridge the water is treated and then exits the filter cartridge downwards through water outlets at the bottom of the filter cartridge. The filter cartridge is also provided with air outlets at its very top in order to allow air from inside the filter cartridge to exit the filter cartridge upwards at the beginning of the filtration process.

Another filtration device is known from EP 1 748 830 B9. In this filtration device the filter cartridge on one hand and the inlet funnel on the other are provided with corresponding fixing means for ensuring that a sealing rim of the filter cartridge comes into contact with an edge of the inlet funnel during insertion of the filter cartridge into the inlet funnel thereby making sure that a tight seal between the two is provided every time. These fixing means together further define a throttle, which limits the water flow through the filtration device. The manufacturer is thus able to influence the limitation of the water flow by the design of either the filter cartridge or the inlet funnel.

Known gravity-operated filtration devices are very good at reducing the water hardness and the amount of chlorine and the like. With these capabilities they meet the most common standards such as DIN 10521. However, gravity-operated filtration devices have so far been unable to comply with exceptionally high standards such as the NSF P231 by NSF International. Such high standards can usually only be accomplished by filtration devices that filter water under a pressure higher than the one inflicted by gravitational force. One such device is known from US 9,365,434 B2. Devices that filter water under high pressure are generally not portable, limiting their usability.

It is therefore the object of the invention to achieve better filtration results without needing water under high pressure.

The object of the invention is solved by a filtration device according to claim 1.

The filtration device comprises an inlet funnel having a funnel interior, a funnel outlet and a first sealing element around the funnel outlet. A cartridge mount comprising a mount housing having a second sealing element is arranged such that the second sealing element and the first sealing element form a first seal. The mount housing comprises a mount inlet and a mount outlet connected by a flow path, at least one mount filter in the flow path, and a third sealing element around the mount inlet. A filter cartridge comprising a cartridge housing having a fourth sealing element is arranged such that the fourth sealing element and the third sealing element form a second seal. The cartridge housing of the filter cartridge has a cartridge inlet and a cartridge outlet, the cartridge inlet being in direct fluid communication with the funnel outlet and the cartridge outlet being in direct fluid communication with the mount inlet, and wherein at least one cartridge filter is arranged in the cartridge housing.

The filtration device is gravity-operated.

The filtration device according to the invention uses a two stage filtration process for achieving exceptional filtration results. In a first stage water is filtered by the cartridge filter arranged in the filter cartridge. This filter cartridge preferably contains granular treatment media such as active coal, ion exchange material and the like. It can be a commonly known filter cartridge such as one known from EP 1 748 830 B9. The cartridge filter reduces the water hardness and filters out chlorine, lead, and the like. In a second stage harmful substances like cysts, bacteria, and viruses are filtered out by the mount filter. The filtrations capabilities are thus improved.

A mount filter preferably comprises a filter cloth made from a folded non-woven fabric comprising several layers, in particular three to four layers. The inventors have found that such a filter cloth is able to filter out cysts, bacteria, and viruses. In order to achieve a satisfying throughput with the filtration device the filter cloth preferably has a total filter area of 1000 cm² < A < 2000 cm², in particular 1400 cm² ≤ A < 2000 cm². The inventors have found that such a filter area can be achieved by arranging the filter cloth along a closed path around the filter cartridge, wherein the filter cloth is folded back and forth along said path. In such an arrangement there is enough filter area for the water to pass through the filter cloth. This way, the pressure inflicted by the gravitational force on the water is sufficient for achieving a satisfying throughput. This way a throughput of 0.1 to 0.2 l/min is achieved over the lifetime of the cartridge mount. On the other hand, a filter area of above 2000 cm² would increase the throughput too much such that the water might not be sufficiently treated by the filter cartridge arranged in the cartridge mount. The pore size of the filter cloth is smaller than the size of the viruses to be held back. With such a filter cloth the filtration device meets both the NSF P231 and the ASTM F838/15 standard.

The filter cloth is preferably fixated in the mount housing by an adhesive bond, in particular by a potting resin, in particular an epoxy resin. The filter cloth is preferably fixated to the mount housing in a circular manner at both an upper end and a lower end. This not only hinders the filter cloth from moving about in the mount housing but also provides a tight seal between the filter cloth and the mount housing.

Both the filter cartridge and the cartridge mount have a predetermined lifetime. This lifetime is determined by the filter material used. Filter materials such as ion exchange material get depleted while filter materials such as filter cloths can either get clogged or can suffer structural damage and become permeable over time. Common filter cartridges are intended to be replaced about every four weeks. The filter cloth according to the invention on the other hand is designed to have a much longer lifetime and have to be replaced about every six months only.

By splitting up the two filtering stages in two separately replaceable components the inventors have made it possible for both components to have to be replaced only when they are actually depleted. This leads to limited waste and limited cost for the user. It also make it possible for the consumer to intermix different filter cartridges with different cartridge mounts based on the user circumstances or personal desires.

At least one of the several layers of the filter cloth preferably comprises active coal. In commonly known filter cartridges active coal is mainly responsible for filtering out chlorine and lead. In order to achieve the above referenced exceptionally high standards it has been proven to be beneficial to include active coal also in the mount filter to further increase the removal of chlorine and lead.

The cartridge mount preferably comprises a mount housing having a depression formed by a depression wall, in which the filter cartridge can be placed. Providing a depression limits the overall size of the assembly consisting of the cartridge mount and the filter cartridge. A depression further makes it easier for the user to place the filter cartridge correctly. The placement is further facilitated for the user in embodiments, in which the depression comprises a projection, preferably projecting from the bottom wall of the depression, with a single central mount inlet and in which the filter cartridge comprises a recess, wherein the recess is arranged over and around the projection forming a gap when the filter cartridge is correctly placed in the depression. The projection and recess act as guiding elements during the insertion of the filter cartridge into the cartridge mount. The gap acts as a channel through which water can flow from cartridge outlets of the filter cartridge to the mount inlet.

The third sealing element and the fourth sealing element are preferably smaller than the funnel outlet viewed in a direction along a central axis of the filtration device. In other words: when viewed from above the depression is completely visible through the funnel outlet when no filter cartridge is arranged in the cartridge mount. This way the filter cartridge can be placed in and removed from the depression when the cartridge mount is already attached to the inlet funnel. Since the filter cartridge has to be replaced repeatedly during the lifetime of the cartridge mount this configuration limits the necessary actions for replacing the filter cartridge.

It is generally desired that the water flows from the inlet funnel directly into the filter cartridge. It is therefore preferred that the second sealing element is arranged around the depression.

The second sealing element is preferably less rigid then the first sealing element. When the cartridge mount is attached to the inlet funnel the second sealing element is then primarily deformed, thereby providing a tight seal. It would generally be possible to make the first sealing element less rigid then the second sealing element so that it is primarily the first sealing element that deforms. Since the cartridge mount is replaced regularly the inventors have found it to be better to provide the less rigid sealing element at the replaced part so that the sealing element not replaced does not wear out over time.

The second sealing element preferably comprises a plurality of sealing lips, in particular three sealing lips. The three sealing lips are preferably arranged, each at a distance to the neighbouring one(s) in a direction perpendicular to a central axis X of the filtration device. As it was described above the first seal has to be very tight and reliable. A plurality of sealing lips improves the sealing performance. Even though the sealing lips increase the manufacturing costs of the cartridge mount, the inventors have found a multitude of three sealing lips to be an effective compromise between the necessity for a tight seal and the desire to limit the manufacturing costs and mounting space. After all, the cartridge mount is not replaced as often as the filter cartridge so that the increase in cost is still acceptable.

The second sealing element preferably defines a flat sealing surface, onto which the sealing lips come to rest when forming the first seal. Such a flat sealing surface can be easily cleaned by the user making it possible to counteract long-term contaminations of the first sealing.

The third sealing element is preferably a sealing seat and the fourth sealing element is preferably a sealing rim. The combination of a sealing seat and a sealing rim has proven to be sufficiently tight in the past, e. g. in EP 1 748 830 B9. The sealing seat is preferably formed by the depression wall such that the filter cartridge with its sealing rim can be inserted into the depression and the section of the depression wall to which the sealing rim adheres acts as the sealing seat. This way the filter cartridge can be pushed into the depression easily and manufacturing tolerances are compensated for by the flexibility of the depression wall and the cartridge housing.

The cartridge mount is preferably attached to the inlet funnel by a bayonet connection. This way the cartridge mount is detachable from the inlet funnel and can therefore be replaced. The bayonet connection serves two purposes at once. On the one hand a bayonet connection makes it easy for the user to replace the cartridge mount since it requires only a turning motion followed by an axial motion for removing. On the other hand a bayonet connection is able to inflict enough pressure between the first and second sealing elements in order to achieve an exceptionally tight first seal.

In some embodiments the cartridge mount may also be detachable from the inlet funnel by other means. Instead of using a bayonet connection, it is especially possible to make the cartridge mount insertable into the inlet funnel from above. In such embodiments the first sealing element may be a funnel seat in the inlet funnel and the second sealing element may be a mount rim arranged on the mount housing. In such embodiments the first seal is generally not as tight as it is with a bayonet connection. On the other hand the cartridge mount may then be inserted into and removed from the inlet funnel from above making its placement particular easy and similar to the placement of the filter cartridge in the cartridge mount.

The first seal is preferably an axial seal. The first seal should generally be tighter then the second seal. If water passes through the second seal, only the unharmful substances such as chlorine or calcium can bypass the filter cartridge and in rare cases even the mount filter. While this is acceptable for small amounts with regard to the unharmful - but undesired - substances, it is not acceptable for harmful substances such as cysts, bacteria, and viruses. If these substances bypass the second seal, they are still filtered out by the mount filter. If they bypass the first seal, they can potentially end up in the filtered water, which is particularly undesirable. The inventors have found that it is easier to achieve a tight seal with an axial seal, which is why an axial seal was chosen as the first seal.

The use of an axial seal is particularly advantageous in combination with the bayonet connection since a bayonet connection provides a strong axial force. In addition the bayonet connection provides a predetermined end position in which in which the sealing elements of the first seal are deformed to the exact right amount so that the user can be sure that the first seal is tight.

The second seal is preferably a radial seal.

Both the cartridge housing and the mount housing are preferably made up of one or more parts made from injection molding. It is particularly preferable if they both comprise a cup shaped part into which the respective filter can be arranged as well as a lid-like element for closing the cup shaped part at the top. This makes the assembly of both the filter cartridge and the cartridge mount cost effective.

The object of the invention is also solved by a cartridge mount for filtration device comprising a mount housing having a second sealing element for interacting with a first sealing element of an inlet funnel to form a first seal, wherein the mount housing comprises a mount inlet and a mount outlet connected by a flow path, at least one mount filter in the flow path and a third sealing element around the mount inlet for forming a second seal with a fourth sealing element of a filter cartridge.

The cartridge mount may further include any of the features described above.

The invention will be described in detail with reference to the examples shown in the drawings, in which the following is shown:
- Figure 1: a filtration device with a container in a sectional side view;
- Figure 2: the filtration device of figure 1 without the container in a sectional side view;
- Figure 3: a cartridge mount of the filtration device of figure 1 in a sectional side view;
- Figure 4: a filter cloth in a top view.

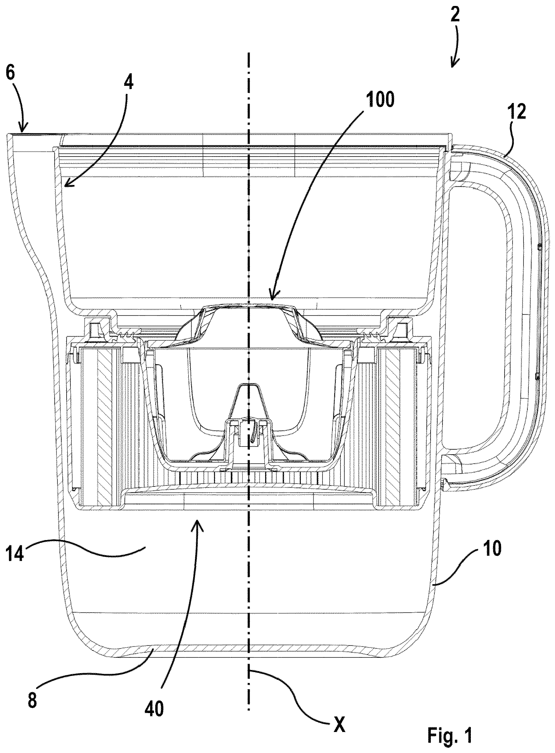

The filtration device 2 shown in figure 1 comprises a central axis X as well as an inlet funnel 4, which is arranged in a container 6. The container 6 comprises a container floor 8 as well as a container wall 10. The container floor 8 and the container wall 10 together define a container interior 14. The inlet funnel 4 is arranged in the container interior 14. A handle 12 is arranged on the outer side of the container wall 10. A user can pick up and tilt the container 6 via the handle 12 easily. The container 6 may further comprise a lid not shown here.

The inlet funnel 4 has a funnel floor 22 and a funnel wall 24, which together define a funnel interior 26. In use, water that is to be filtered can be poured into the funnel interior 26 from above. The filtration device 2 is thus gravity-operated. The funnel floor 22 comprises one single central opening forming a funnel outlet 28. The funnel outlet 28 is defined by a funnel edge 30 of the funnel floor 22. The funnel edge 30 forms a first sealing element 32 of the inlet funnel 4. Water being poured into the funnel interior 26 may exit the inlet funnel 4 through the funnel outlet 28.

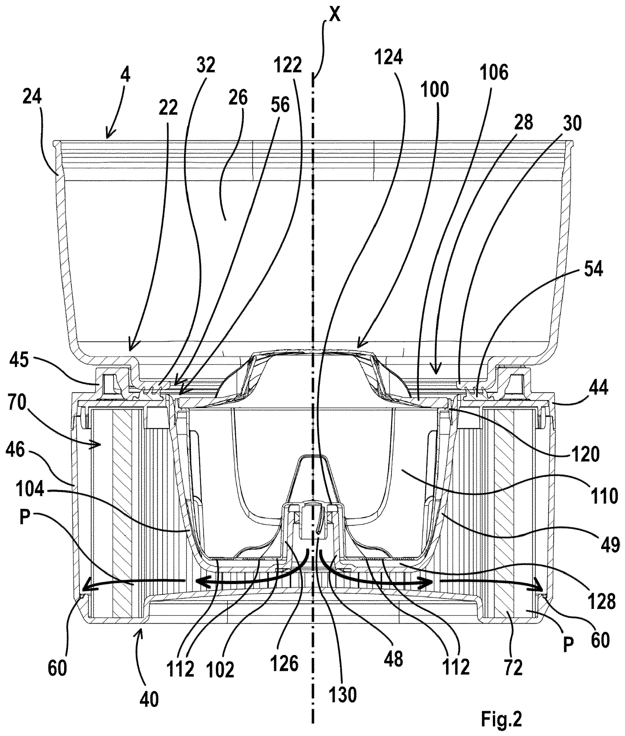

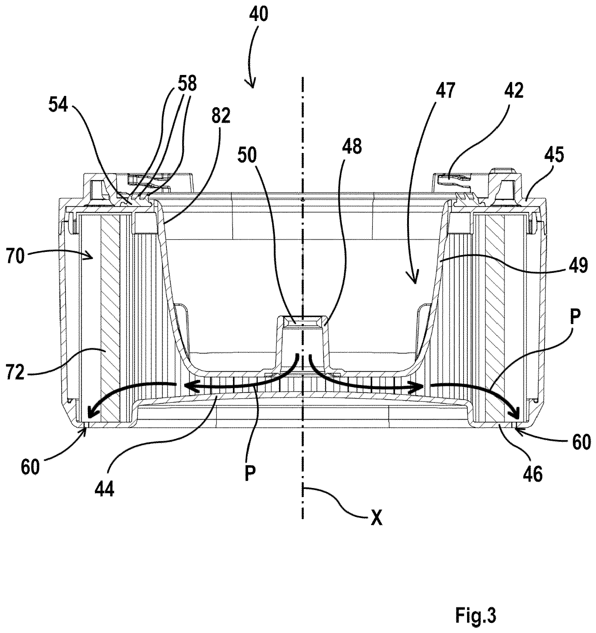

A cartridge mount 40 is attached to the inlet funnel 4 from below (see figure 2) by means of a bayonet connection. The cartridge mount 40 comprises several bayonet elements 42 (see figure 3), which interact with compatible elements of the inlet funnel 4 not shown here. Through this interaction the cartridge mount 40 is detachable from the inlet funnel 4 by a turning motion and attachable to the inlet funnel 4 by an inverse turning motion.

The cartridge mount 40 comprises a mount housing 44 with an upper part 45 and a lower part 46. The upper part 45 comprises the bayonet elements 42. The upper part 45 further comprises a single central depression 47 formed by a depression wall 49. The depression 47 comprises a frustoconical projection 48 at its bottom with a single central mount inlet 50.

A second sealing element 54 is arranged around the central depression 47. When the cartridge mount 40 is attached to the inlet funnel 4, the sealing elements 32, 54 interact by being pressed against each other in axial direction, creating a first seal 56. The first seal 56 ensures that all water coming from the funnel interior 26 flows into and not around the cartridge mount 40. The second sealing element 54 is less rigid than the first sealing element 32 and comprises three sealing lips 58. When the sealing elements 32, 54 come into contact the sealing lips 58 deform thus creating a secure first seal 56. The three sealing lips 58 are arranged, each at a distance to the neighbouring one(s) in a direction perpendicular to the central axis X.

The lower part 46 comprises several mount outlets 60 at the bottom through which water may exit the cartridge mount 40 into the container interior 14. The mount inlet 50 and the mount outlets 60 are connected by flow paths P. Water may thus flow from the mount inlet 50 to the mount outlets 60 via the flow paths P.

The cartridge mount 40 further comprises a mount filter 70. The mount filter 70 is arranged in the flow path P. Water flowing from the mount inlet 50 to the mount outlets 60 flow through the mount filter 70 being filtered on the way.

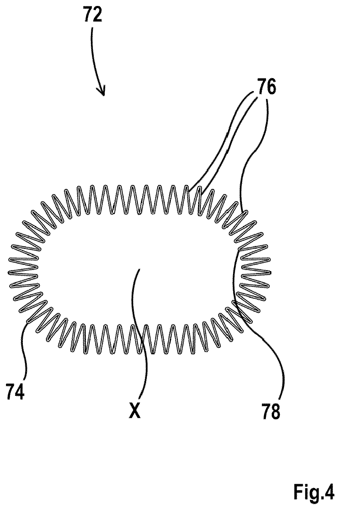

The mount filter 70 is arranged in the mount housing 44 and comprises a filter cloth 72 (see figure 4). The filter cloth 72 is a folded non-woven fabric and comprises several layers. At least one of the layers comprises active coal. The filter cloth 72 is fixated in the mount housing 44 in a circular manner at both an upper end and a lower end of the filter cloth 72 by an epoxy resin. This way no water coming from the mount inlet 50 can flow around the filter cloth 72 on its way to the mount outlets 60.

The non-woven fabric is arranged around the central axis X. The cross-section of the non-woven fabric along said central axis X is approximately the same at every level. The filter cloth 72 is able to filter out harmful substances such as cysts, bacteria, viruses. One side effect of this feature is that the throughput per area of the filter cloth 72 is rather low since the available channels through the filter 72 are small. A large filter area is thus exceptionally beneficial to the overall throughput of the filtration device 2. The filter area can be defined as the area at which water can enter into the filter cloth 72 in order to be filtered. The filter cloth 72 shown in the figures has a total filter area of A ≈ 1400 cm². This is achieved by the folded arrangement of the non-woven fabric. On an outer side 74 the angle between two neighbouring folding flanks 76 is approximately 20.8 °. On an inner side 78 the angles differ due to the elongated form of the filter cloth 72.

The cartridge mount 40 further comprises a third sealing element 82 in the form of a sealing seat. The sealing seat is arranged in an upper area of the depression 47 and formed by the depression wall 49.

The filtration device 2 further comprises a filter cartridge 100 with a cartridge housing 102. The filter cartridge 100 can be placed in the depression 47 and accessed by the user from above (see figure 2). The depression 47 is smaller than the funnel outlet 28 in a projection along the central axis X. This way the filter cartridge 100 can be placed in and removed from the depression 47 when the cartridge mount 40 is already attached to the inlet funnel 4.

The cartridge housing 102 comprises a cartridge cup 104 closed at the top by a cartridge lid 106. The cartridge lid 106 comprises several cartridge inlets (not shown) so that water coming from the funnel interior 4 into a cartridge interior 110 passing both the funnel outlet 28 and the cartridge inlets on the way. The cartridge inlets are thus in direct fluid communication with the funnel outlet 28.

In the cartridge interior 110 a cartridge filter (not shown) in the form of granular filter medium is arranged. The granular filter medium comprises active coal and ion exchange resin. In other embodiments the granular filter medium may have different compositions. The cartridge filter primarily reduces the hardness of the water. In addition, undesired elements such as chlorine are removed.

The cartridge cup 104 comprises several cartridge outlets 112 at its bottom so that the treated water may exit the filter cartridge 100 downwards.

At its upper end the cartridge cup 104 comprises a fourth sealing element 120 in the form of a sealing rim. The filter cartridge 100 is placed in the cartridge mount 40 such that the third sealing element 82 and the fourth sealing element 120 form a second seal 122. The second seal 122 ensures that water entering coming from the inlet funnel 4 flows into the filter cartridge 100 and not around the filter cartridge 100 directly to the mount inlet 50.

The cartridge cup 104 comprises a single central frustoconical recess 124 at its bottom (see figure 2). The recess 124 is generally larger than the projection 48. When the filter cartridge 100 is placed in the depression 47, the recess 124 is arranged over and around the projection 48 forming a gap 126. Water coming from the cartridge interior 110 can exit the filter cartridge 100 via the cartridge outlets 112 into a buffer volume 128 below the filter cartridge 100. From there it can flow through the gap 126 and enter into the mount housing 44 via the mount inlet 50. The cartridge outlets 112 are therefore in direct fluid communication with the mount inlet 50.

A central pin 130 is arranged at an upper end of the recess 124. The pin 130 projects into the mount inlet 50 limiting the flow rate of water through the mount inlet 50, thereby increasing the treatment time for water inside the filter cartridge 100.

### List of references

- 2: filtration device
- 4: inlet funnel
- 6: container
- 8: container floor
- 10: container wall
- 12: handle
- 14: container interior

- 22: funnel floor
- 24: funnel wall
- 26: funnel interior
- 28: funnel outlet
- 30: funnel edge
- 32: first sealing element

- 40: cartridge mount
- 42: bayonet element
- 44: mount housing
- 45: upper part
- 46: lower part
- 47: depression
- 48: projection
- 49: depression wall
- 50: mount inlet

- 54: second sealing element
- 56: first seal
- 58: sealing lip
- 60: mount outlet

- 70: mount filter
- 72: filter cloth
- 74: outer side
- 76: flank
- 78: inner side

- 82: third sealing element

- 100: filter cartridge
- 102: cartridge housing
- 104: cartridge cup
- 106: cartridge lid
- 110: cartridge interior
- 112: cartridge outlet

- 120: fourth sealing element
- 122: second seal
- 124: recess
- 126: gap
- 128: buffer volume
- 130: pin

- P: flow path
- X: central axis

## Claims

1. Filtration device (2) comprising an inlet funnel (4) having a funnel interior (26), a funnel outlet (28), and a first sealing element (32) around the funnel outlet (28),
wherein a cartridge mount (40) comprising a mount housing (44) having a second sealing element (54) is arranged such that the second sealing element (54) and the first sealing element (32) form a first seal (56),
wherein the mount housing (44) comprises a mount inlet (50) and a mount outlet (60) connected by a flow path (P), at least one mount filter (70) in the flow path (P), and a third sealing element (82) around the mount inlet (50),
wherein a filter cartridge (100) comprising a cartridge housing (102) having a fourth sealing element (120) is arranged such that the fourt sealing element (120) and the third sealing element (82) form a second seal (122),
wherein the cartridge housing (102) of the filter cartridge (100) has a cartridge inlet and a cartridge outlet (112), the cartridge inlet being in direct fluid communication with the funnel outlet (28) and the cartridge outlet (112) being in direct fluid communication with the mount inlet (50), and wherein at least one cartridge filter is arranged in the cartridge housing (102).

2. Filtration device according to claim 1,
**characterized in that** the mount filter (70) comprises a filter cloth (72) made from a folded non-woven fabric comprising several layers.

3. Filtration device according to claim 2,
**characterized in that** the filter cloth (72) has a total filter area of 1000 cm² < A < 2000 cm².

4. Filtration device according to claim 2 or 3,
**characterized in that** at least one of the several layers comprises active coal.

5. Filtration device according to any of the preceding claims,
**characterized in that** the mount housing (44) has a depression (47) formed by a depression wall (49), in which the filter cartridge (100) can be placed.

6. Filtration device according to claim 5,
**characterized in that** the depression (47) comprises a projection (48) with a single central mount inlet (50) and the filter cartridge (100) comprises a recess (124), wherein the recess (124) is arranged over and around the projection (48) forming a gap (126).

7. Filtration device according to claim 5 or 6,
**characterized in that** the third sealing element (82) and the fourth sealing element (120) are smaller than the funnel outlet (28) in a projection along a central axis (X) of the filtration device (2).

8. Filtration device according to any one of claims 5 to 7,
**characterized in that** the second sealing element (54) is arranged around the depression (47).

9. Filtration device according to any of the preceding claims,
**characterized in that** the second sealing element (54) is less rigid than the first sealing element (32).

10. Filtration device according to any of the preceding claims,
**characterized in that** the second sealing element (54) comprises a plurality of sealing lips (58).

11. Filtration device according to any of the preceding claims,
**characterized in that** the third sealing element (82) is a sealing seat and the fourth sealing element (120) is a sealing rim.

12. Filtration device according to claim 5 and 11,
**characterized in that** the sealing seat is formed by the depression wall (49).

13. Filtration device according to any of the preceding claims,
**characterized in that** the cartridge mount (40) is attached to the inlet funnel (4) by a bayonet connection.

14. Filtration device according to any of the preceding claims,
**characterized in that** the first seal (56) is an axial seal.

15. Cartridge mount (40) for a filtration device (2) comprising a mount housing (44) having a second sealing element (54) for interacting with a first sealing element (32) of an inlet funnel (4) to form a first seal (56),
wherein the mount housing (44) comprises a mount inlet (50) and a mount outlet (60) connected by a flow path (P), at least one mount filter (70) in the flow path (P), and a third sealing element (82) around the mount inlet (50) for forming a second seal (122) with a fourth sealing element (120) of a filter cartridge (100).
